# EUROPEAN PATENT APPLICATION

(11) **EP 1 714 825 A1**
(43) Date of publication of application: **25.10.2006**
(21) Application number: 06008344.1
(22) Date of filing: 21.04.2006
(51) Int. Cl.: B60L 11/12, B60L 11/02, B60K 6/04

(54) **Hybrid drive device and straddle-type vehicle using hybrid drive system**

(30) Priority: 21.04.2005 JP 2005123505
(71) Applicant: YAMAHA HATSUDOKI KABUSHIKI KAISHA, Iwata-shi, Shizuoka-ken 438-8501 (JP)
(72) Inventor: Masuda, Tatsuyuki Yamaha Hatsudoki K.K., Iwata-shi Shizuoka-ken 438-8501 (JP); Hosoi, Yukiharu Yamaha Hatsudoki K.K., Iwata-shi Shizuoka-ken 438-8501 (JP); Sasaki, Kaoru Yamaha Hatsudoki K.K., Iwata-shi Shizuoka-ken 438-8501 (JP); Kaneda, Toshiaki Yamaha Hatsudoki K.K., Iwata-shi Shizuoka-ken 438-8501 (JP); Watanabe, Takeshi Yamaha Hatsudoki K.K., Iwata-shi Shizuoka-ken 438-8501 (JP)
(74) Representative: Grünecker, Kinkeldey, Stockmair & Schwanhäusser Anwaltssozietät

(57) **Abstract**

The present invention relates to a hybrid drive device for a vehicle having an electric motor for driving a wheel, a generator for charging a battery connected to the electric motor, and an internal combustion engine for rotating the generator, wherein an output of the internal combustion engine is preset to be higher than an output of the electric motor over the complete speed range of the vehicle.

## Description

The present invention relates to a hybrid drive device having an electric motor for driving a wheel, a generator for charging a battery connected to the electric motor and an internal combustion engine for rotating the generator, and a straddle-type vehicle using such a hybrid drive system.

So far, some straddle-type vehicles are proposed to use a hybrid drive system (the so-called parallel hybrid drive system) having an engine (internal combustion engine) and an electric motor as a power source for driving a wheel.

Also, some other straddle-type vehicles are proposed to use another hybrid drive system (the so-called series hybrid drive system) having an electric motor as a power source for driving the wheel, a generator for charging a battery connected to the electric motor, and an engine for rotating the generator.

In connection with the straddle-type vehicles using the series hybrid drive system, it is the basal thought to supplement a lack of the output of the electric motor by the engine. Thus, it is common that an engine generating a smaller output than the output of the electric motor is incorporated (see JP-A-2002-345109, Pages 3 and 4, FIGs. 2 and 3).

However, there is a following problem with the straddle-type vehicles using the series hybrid drive system having the engine generating the smaller output than the output of the electric motor, as described above.

In the straddle-type vehicles using the series hybrid drive system, as described above, the wheel is driven only by the output of the electric motor. Because of the situation, when the electric motor keeps up a high output condition (for example, an operation mode in which the so-called go and stop operations are frequently made), such an engine outputting less than the electric motor may not have the generator generate sufficient power which is necessary for the electric motor.

That is, the straddle-type vehicles using the series hybrid drive system have a problem such that a charge amount of the battery (SOC: State of Charge) gradually falls and the vehicles are finally led into a disabled state for running.

The present invention is made under the circumstances, and an object thereof is to provide a hybrid drive device for a straddle-type vehicle using a series hybrid drive system, that can avoid the condition that the vehicle is led into a disabled state for running due to a lack of the electric power which is generated, and also to provide such a straddle-type vehicle using the improved hybrid drive system.

This objective is solved in an inventive manner by a hybrid drive device for a vehicle having an electric motor for driving a wheel, a generator for charging a battery connected to the electric motor, and an internal combustion engine for rotating the generator, wherein an output of the internal combustion engine is preset to be higher than an output of the electric motor over the complete speed range of the vehicle.

Preferably, an output of the generator is preset to be higher than the output of the electric motor over the complete speed range of the vehicle.

Further, preferably wherein, at the same time, the output of the internal combustion engine is preset to be higher than the output of the generator and the output of the generator is preset to be higher than the output of the electric motor over the complete speed range of the vehicle.

Still further, preferably the electric motor drives the wheel by using the power charged in the battery or directly by using the power generated by the generator.

According to a further embodiment, the hybrid drive engine further comprises a controller configured to determine whether electric power generated by the generator is charged into the battery or is supplied to the electric motor.

This objective is also solved in an inventive manner by a straddle-type vehicle, in particular motorcycle, having a hybrid drive device according to one of the above embodiments.

In the following, the present invention is explained in greater detail with respect to several embodiments thereof in conjunction with the accompanying drawings, wherein:
- FIG. 1: is a left side elevational view of a motorcycle according to an embodiment,
- FIG. 2: is a cross sectional view taken along the line F2-F2 of FIG. 1,
- FIG. 3: is a logic block diagram of a hybrid drive device according to the present embodiment,
- FIG. 4: is an illustration showing output characteristics of an engine, a generator unit and an electric motor included in the hybrid drive device according to the embodiment,
- FIG. 5: is an illustration showing running performance curves of the motorcycle according to the embodiment of the present invention and also of motorcycles according to comparative examples, and
- FIGs. 6(a) and 6(b): are an illustration showing relationships among a battery SOC, a charge amount to the battery and a vehicle speed of the motorcycle according to the embodiment of the present invention and also of a motorcycle according to a comparative example.

### Within the FIGs. and the description, reference numeral

- 10:: is a motorcycle,
- 20:: is a front wheel,
- 30:: is a controller,
- 40:: is an engine,
- 41:: is a piston,
- 42:: is a connecting rod,
- 43:: is a crankshaft,
- 45:: is a radiator unit,
- 50:: is a generator cooling fan,
- 60:: is a generator unit,
- 61:: is a battery,
- 70:: is a radiator cooling fan,
- 80:: is an electric motor unit,
- 81:: is a rotary shaft,
- 90:: is a rear wheel,
- 91:: is a rear wheel axle, and
- 100:: is a hybrid drive device.

### (Structure of Straddle-type Vehicle According to Present Embodiment)

Next, an embodiment of the straddle-type vehicle (motorcycle) will be described while referring to drawings. Incidentally, in the following descriptions of the drawings, the same or similar portions are assigned with the same or similar reference numerals or symbols. However, it should be noted that the drawings are schematic and ratios of respective sizes or the like differ from actual ones.

Accordingly, specific sizes or the like should be determined in consideration of the following descriptions. Also, certainly, mutual relationships of the sizes and ratios between respective drawings can be different from each other.

### (1) Overall Structure of Motorcycle

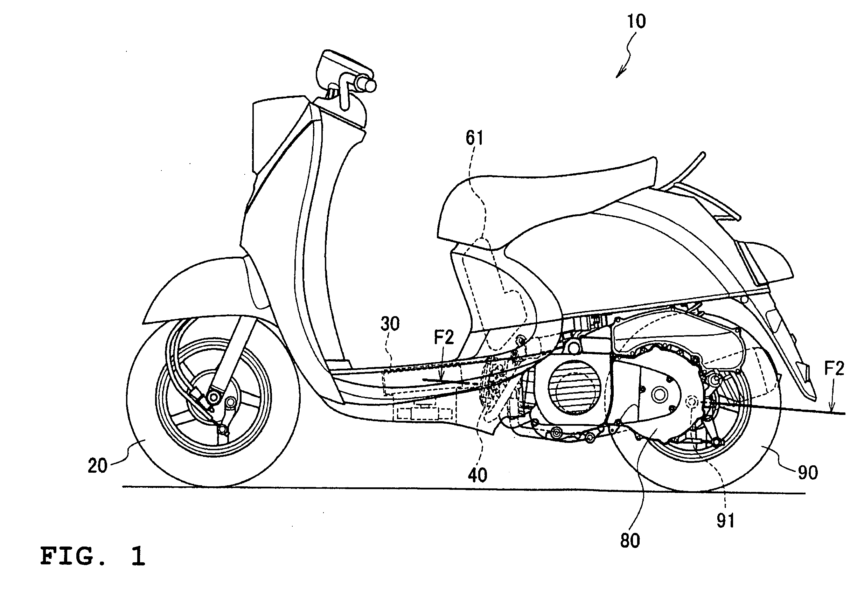

First, with reference to FIG. 1, the overall structure of a motorcycle 10 which is one of the straddle-type vehicles according to the present embodiment will be described.

As shown in FIG. 1, the motorcycle 10 is a straddle-type motorcycle having a front wheel 20 and a rear wheel 90. The motorcycle 10 is one of straddle-type vehicles using the so-called hybrid drive system (specifically, a series hybrid drive system). The rear wheel 90 is rotated by an electric motor unit 80 (electric motor) disposed in front of a rear wheel axle 91.

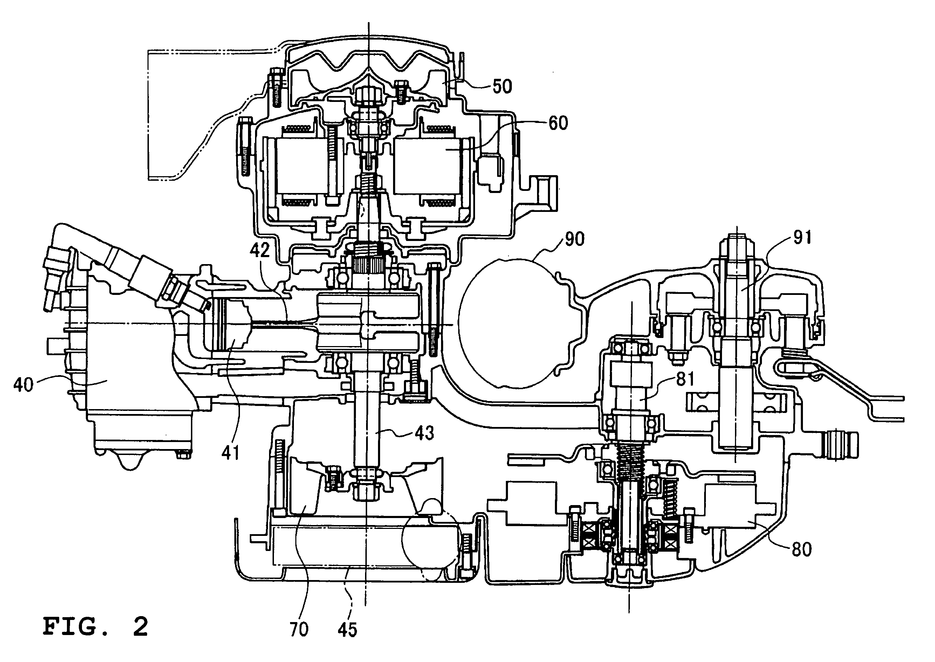

A generator unit 60 (see FIG. 2) is connected to a battery 61 which charges electric power to be supplied to the electric motor unit 80 and so forth. The generator unit 60 is rotated by an engine 40. The generated power is charged into the battery 61.

A controller 30 for controlling the generator unit 60 and the electric motor unit 80 is disposed in front of the engine 40.

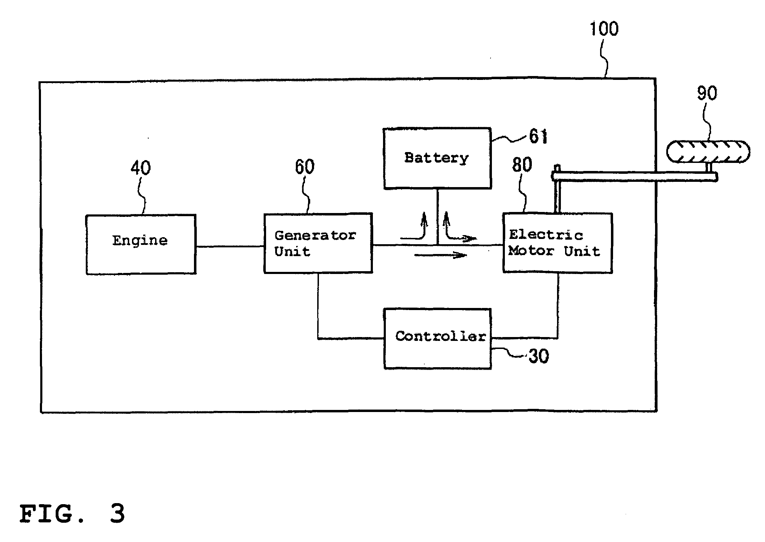

In the present embodiment, the controller 30, the engine 40, the generator unit 60 (including the battery 61) and the electric motor unit 80 together form a hybrid drive device 100 (see FIG. 3).

### (2) Structure of Hybrid Drive Device

Next, respective specific structures of the engine 40, the generator unit 60 and the electric motor unit 80 which are included in the hybrid drive device 100 discussed above will be described. FIG. 2 is a cross sectional view taken along the line F2-F2 of FIG. 1.

The engine 40 rotates the generator unit 60 which generates the electric power necessary for rotating the electric motor unit 80. The engine 40 is a single cylinder, four stroke engine. Reciprocal movement of a piston 41 rotates a crankshaft 43 through a connecting rod 42.

A generator cooling fan 50 is attached to an end of the crankshaft 43 located outside in a width direction of the vehicle more than the generator unit 60. On the other hand, a radiator cooling fan 70 for cooling the engine 40 (radiator unit 45) is attached to another end of the crankshaft 43 opposing the generator unit 60 side.

The generator cooling fan 50 and the radiator cooling fan 70 rotate with the rotation of the crankshaft 43. The generator cooling fan 50 cools the generator unit 60, while the radiator cooling fan 70 cools the radiator unit 45.

The electric motor unit 80 has a rotary shaft 81. The rotary shaft 81 rotates the rear wheel axle 91 through a transmission gear (not shown). When the rear wheel axle 91 is rotated by the electric motor unit 80, the rear wheel 90 fixed to the rear wheel axle 91 is also rotated.

### (3) Logic Block Structure of Hybrid Drive Device

FIG. 3 shows a logic block structure of the hybrid drive device 100. As shown in FIG. 3, the hybrid drive device 100 is formed with the engine 60, the generator unit 60, the battery 61 and the electric motor unit 80.

As described above, the engine 40 rotates the generator unit 60. When the generator unit 60 is rotated, the generator unit 60 generates the electric power, and the generated power is charged into the battery 61.

The electric motor unit 80 rotates the rotary shaft 81 (see FIG. 2) using the power charged in the battery 61, or directly using the power generated by the generator unit 60, and drives the rear wheel 90 through the transmission gear (not shown).

The controller 30 controls operations of the engine 40, specifically, the start/stop operations and an engine speed of the engine 40 in response to the SOC (State of Charge) of the battery 61, i.e., a charge amount of the battery 61 and to a rotational condition of the electric motor unit 80.

Also, the controller 30 determines whether the electric power generated by the generator unit 60 is charged into the battery 61 or the power is supplied to the electric motor unit 80. The controller 30 also can control the power generated by the electric motor 80 to be charged into the battery 61 when the motorcycle 10 is decelerated (the so-called regenerative braking).

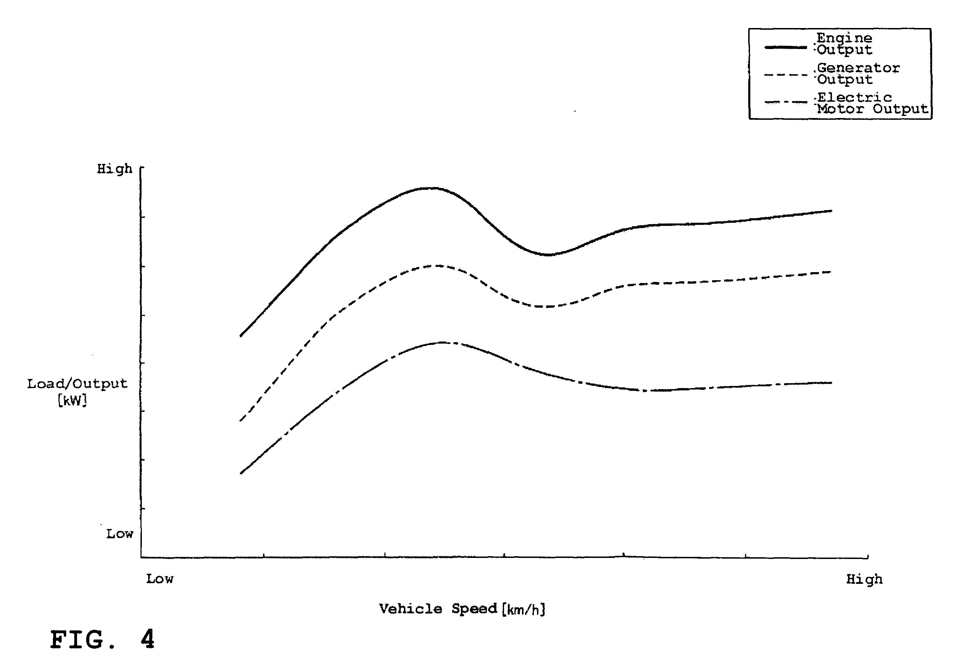

As shown in FIG. 4, an output of the engine 40 (internal combustion engine) is set higher than an output of the electric motor unit 80 (electric motor) all over the vehicle speed (low speed - high speed) ranges.

Also, an output of the generator unit 60 (generator) is set higher than the output of the electric motor unit 80 (electric motor) all over the vehicle speed (low speed - high speed) ranges.

Further, as shown in FIG. 4, the output of the engine 40, the output of the generator unit 60 and the output of the electric motor unit 80 satisfy relationships of the output of the engine 40 > the output of the generator unit 60 > the output of the electric motor unit 80 all over the vehicle speed (low speed - high speed) ranges.

### (Action and Effect)

Next, action and effect of the motorcycle 10 incorporating the hybrid drive device 100 discussed above will be described.

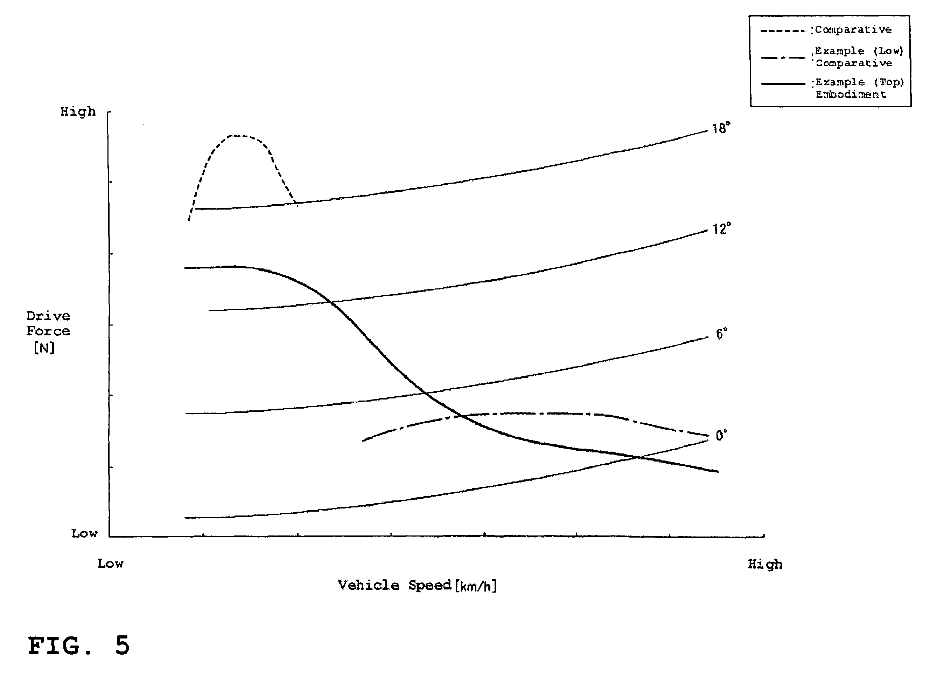

FIG. 5 shows a running performance curve of the motorcycle 10 incorporating the hybrid drive device 100. In FIG. 5, narrow actual lines indicate running resistances (slope climbing resistances).

A motorcycle provided as a comparative example uses an engine as a power source for driving the rear wheel 90. Performance of the motorcycle of the comparative example equals to the performance which an average small motorcycle (having low and top gear positions) possesses. FIG. 5 shows running performance curves (low gear position and top gear position) of the motorcycle of the comparative example.

Also, FIG. 5 shows the running performance curve of the motorcycle 10 (embodiment). The running performance of the motorcycle 10 (embodiment) is equal to that of the comparative example.

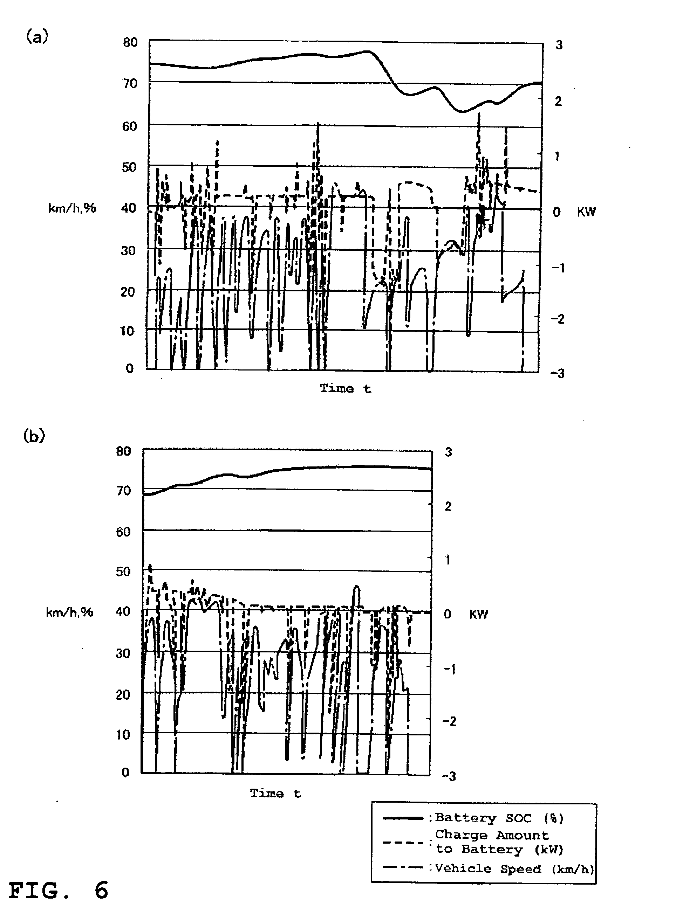

Next, with reference to FIGs. 6(a) and 6(b), a transition of SOC of the battery 61 mounted on the motorcycle 10 will be described.

In order to compare with the motorcycle 10 that satisfies relationships of the output of the engine 40 > the output of the generator unit 60 > the output of the electric motor unit 80 (hereunder, Engine > Generator > Electric Motor) all over the vehicle ranges, FIG. 6(a) shows relationships among a battery SOC (unit: %), a charge amount to the battery (unit: kW) and a vehicle speed (unit: km/h) in a motorcycle incorporating a hybrid drive device which has a relationship of Electric Motor > Engine all over the vehicle speed ranges.

FIG. 6(b) shows relationships among a battery SOC (unit: %), a charge amount to the battery (unit: kW) and a vehicle speed (unit: km/h) in the motorcycle 10 that satisfies the relationships of the output of the engine 40 > the output of the generator unit 60 > the output of the electric motor unit 80.

In both of FIGs. 6(a) and 6(b), the one dot chain line indicating the vehicle speed fluctuates up and down in response to a lapse of time. Thus, FIGs. 6(a) and 6(b) show a running mode in which stops and starts at signal lights (go and stop operations) are frequently repeated.

In FIG. 6(a), i.e., in the motorcycle incorporating the hybrid drive device which has the relationship of Electric Motor > Engine all over the vehicle speed ranges, when the running mode, in which the go and stop operations are frequently repeated and the electric power consumed by the electric motor becomes larger, continues, the generation by the generator is not able to catch up with the consumption, and the battery SOC gradually falls.

The motorcycle of FIG. 6(a) is finally led into a disabled state for running, if the mode, in which the go and stop operations are frequently repeated, continues further.

On the other hand, in the motorcycle 10 according to the present embodiment shown in FIG. 6(b), i.e., in the motorcycle that satisfies the relationships of Engine > Generator > Electric Motor all over the vehicle speed ranges, the generator can keep generating the power to catch up with the consumption, and the battery SOC is maintained at a high level, even if the running mode, in which the go and stop operations are frequently repeated, continues.

As discussed above, according to the motorcycle 10 (hybrid drive device 100), the output of the engine 40 (internal combustion engine) is set higher than the output of the electric motor unit 80 (electric motor) all over the vehicle speed ranges. Thus, the generator unit 60 (generator) can keep generating the power to catch up with the consumption, and the battery SOC is maintained at a high level, even if the running mode, in which the go and stop operations are frequently repeated, continues.

That is, according to the motorcycle 10 (hybrid drive device 100), the condition that the motorcycle 10 is led into a disabled state for running due to a lack of the electric power which is generated is avoidable.

Also, according to the motorcycle 10 (hybrid drive device 100), because the engine 40 whose output is high all over the vehicle speed ranges is mounted thereon, a fuel consumption rate is low, and a range in which the engine speed is low can be used, in comparison with the straddle-type vehicle (hybrid drive device) using the conventional hybrid drive system.

Consequently, noises, vibrations and fuel consumptions of the engine 40 can be reduced. In addition, because the engine 40 operates in a lower speed range, the life of the engine 40 and the life of the drive system coupled with the engine 40 can be elongated.

### (Other Embodiment)

As described above, the teaching of the present invention is disclosed through the embodiment(s) of the present invention. Persons skilled in the art may have various alternatives from the disclosure.

For example, in one of the embodiments described above, the respective outputs satisfy the relationships of Engine > Generator > Electric Motor all over the vehicle speed ranges. The outputs, however, do not necessarily satisfy the relationships of Engine > Generator > Electric Motor. It is enough if, at least, the output of the engine 40 (internal combustion engine) is higher than the output of the electric motor unit 80 (electric motor) all over the vehicle speed ranges.

The description above discloses (amongst others), in accordance with a first aspect, a hybrid drive device (hybrid drive device 100) includes an electric motor (electric motor unit 80) for driving a wheel (rear wheel 90), a battery (battery 61) connected to the electric motor, a generator (generator unit 60) for charging the battery, and an internal combustion engine (engine 40) for rotating the generator, in which an output of the internal combustion engine is higher than an output of the electric motor all over the vehicle speed ranges.

According to this aspect, because the output of the internal combustion engine is preset higher than the output of the electric motor all over the vehicle speed ranges, the generator can keep generating the power to catch up with the consumption, and the charge amount of the battery (SOC) can be maintained at a high level.

That is, according to the aspect, the condition that the vehicle is led into a disabled state for running due to the lack of power which is generated can be avoided.

In accordance with a second aspect, in the hybrid drive device of the first aspect, an output of the generator is higher than the output of the electric motor all over the vehicle speed ranges.

In accordance with a third aspect, in the hybrid drive device of the first aspect, the output of the internal combustion engine, an output of the generator and the output of the electric motor satisfy relationships of the output of the internal combustion engine > the output of the generator > the output of the electric motor all over the vehicle speed ranges.

In accordance with a fourth aspect, a straddle-type vehicle using a hybrid drive system includes the hybrid drive device according to any one of the first to third aspects.

According to the afore-discussed aspect(s), a hybrid drive device for a straddle-type vehicle using a series hybrid drive system, that can avoid the condition that the vehicle is led into a disabled state for running due to a lack of the electric power which is generated, can be provided, and such a straddle-type vehicle using the improved hybrid drive system also can be provided.

The description above discloses (amongst others) a hybrid drive device comprising: an electric motor for driving a wheel; a battery connected to the electric motor; a generator for charging the battery; and an internal combustion engine for rotating the generator, wherein an output of the internal combustion engine is higher than an output of the electric motor all over the vehicle speed ranges.

Preferably, an output of the generator is higher than the output of the electric motor all over the vehicle speed ranges.

Further, preferably the output of the internal combustion engine, an output of the generator and the output of the electric motor satisfy relationships of the output of the internal combustion engine > the output of the generator > the output of the electric motor all over the vehicle speed ranges.

There is further disclosed an embodiment of a straddle-type vehicle using a hybrid drive system, comprising the hybrid drive device according to the above embodiments.

Likewise, as a particularly preferred embodiment, in order to provide a hybrid drive device for a straddle-type vehicle using a series hybrid drive system, that can avoid the condition that the vehicle is led into a disabled state for running due to a lack of the electric power which is generated, and also to provide such a straddle-type vehicle using the improved hybrid drive system, there is disclosed in a hybrid drive device including an electric motor for driving a wheel, a generator for charging a battery connected to the electric motor, and an internal combustion engine for rotating the generator, an output of the internal combustion engine is higher than an output of the electric motor all over the vehicle speed ranges.

## Claims

1. Hybrid drive device (100) for a vehicle having an electric motor (80) for driving a wheel (90), a generator (60) for charging a battery (61) connected to the electric motor (80), and an internal combustion engine (40) for rotating the generator (60), wherein an output of the internal combustion engine (40) is preset to be higher than an output of the electric motor (80) over the complete speed range of the vehicle.

2. Hybrid drive device according to claim 1, wherein an output of the generator (60) is preset to be higher than the output of the electric motor (80) over the complete speed range of the vehicle.

3. Hybrid drive device according to claim 1 or 2, wherein, at the same time, the output of the internal combustion engine (40) is preset to be higher than the output of the generator (60) and the output of the generator (60) is preset to be higher than the output of the electric motor (80) over the complete speed range of the vehicle.

4. Hybrid drive device according to one of the claims 1 to 3, wherein the electric motor (80) drives the wheel by using the power charged in the battery (61) or directly by using the power generated by the generator (60).

5. Hybrid drive device according to claim 4, further comprising a controller (30) configured to determined whether electric power generated by the generator (60) is charged into the battery (61) or is supplied to the electric motor (80).

6. Straddle-type vehicle, in particular motorcycle (10), having a hybrid drive device according to one of the claims 1 to 5.
